(19) Europäisches Patentamt
European Patent Office
Office européen des brevets

(11) **EP 2 625 475 B1**

(12) **FASCICULE DE BREVET EUROPEEN**

(45) Date de publication et mention de la délivrance du brevet:
**10.09.2014 Bulletin 2014/37**

(21) Numéro de dépôt: **11771259.6**

(22) Date de dépôt: **22.09.2011**

(51) Int Cl.:
*F25B 17/08* (2006.01)   *F25B 49/04* (2006.01)

(86) Numéro de dépôt international:
**PCT/FR2011/052190**

(87) Numéro de publication internationale:
**WO 2012/045945 (12.04.2012 Gazette 2012/15)**

(54) **PROCÈDE THERMIQUE METTANT EN OEUVRE UNE PLURALITÉ DE RÉACTEURS DE SORPTION**

THERMISCHES VERFAHREN MIT MEHREREN SORPTIONSREAKTOREN

THERMAL PROCESS IMPLEMENTING A PLURALITY OF SORPTION REACTORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2010 FR 1058166**

(43) Date de publication de la demande:
**14.08.2013 Bulletin 2013/33**

(73) Titulaire: **GAZTRANSPORT ET TECHNIGAZ S.A.**
**78470 St. Rémy Lès Chevreuse (FR)**

(72) Inventeur: **LOMBARD, Fabrice**
**F-78190 Trappes (FR)**

(74) Mandataire: **Loyer & Abello**
**9, rue Anatole de la Forge**
**75017 Paris (FR)**

(56) Documents cités:
**EP-A1- 0 674 142    FR-A1- 2 679 633**

**Description**

L'invention se rapporte au domaine des procédés thermiques et des systèmes thermiques à sorption, en particulier aux procédés et systèmes mettant en oeuvre plusieurs réacteurs de sorption selon des cycles de fonctionnement décalés dans le temps.

Les applications des cycles d'adsorption-désorption sont multiples, en particulier production de froid frigorifique ou cryogénique, climatisation domestique, déshydratation de produits, traitement de l'air ou de gaz industriels, réalisation de pompes à chaleur, compresseurs, pompes à vide, et autres.

Les procédés thermiques utilisant des cycles d'adsorption-désorption présentent généralement l'avantage de fonctionner avec de l'énergie fournie sous la forme de chaleur, sans nécessiter aucune forme d'énergie mécanique. Une telle propriété influence favorablement le coût énergétique de ces procédés. Toutefois, en raison des pertes de chaleur induites par les cycles thermiques du ou des adsorbeurs, le rendement énergétique ou coefficient de performance (COP) d'un tel procédé est généralement médiocre.

Ce fait peut être illustré par un exemple dans le cas des procédés frigorifiques. Un procédé frigorifique traditionnel à compression de la vapeur fournissant du froid à 0°C atteint un COP de l'ordre de 3 à 4. Toutefois, la production d'énergie mécanique ou électrique présente un rendement dont il faut tenir compte afin de faire un bilan global. En considérant un rendement de production de l'ordre de 30% à partir d'une énergie noble, comme du gaz, fuel ou nucléaire, le COP final du procédé frigorifique traditionnel peut être estimé entre environ 0,9 et 1,2.

Pour le même objectif de température, un procédé frigorifique par adsorption d'eau sur zéolithe, par exemple, présente un COP typique de l'ordre de 0,5 à 0,6. Ces performances rendent ces dispositifs à adsorption peu compétitifs a priori. En revanche, malgré des performances plus faibles, ils permettent de s'affranchir d'un apport en énergie noble, car ils peuvent exploiter des chaleurs perdues ou disponibles à faible coût. La compétitivité d'un procédé frigorifique par adsorption dépend donc principalement du contexte d'utilisation.

Il a été proposé dans US-A-5802870 de tenter d'améliorer le rendement énergétique d'un procédé d'adsorption en effectuant des échanges de chaleur entre des adsorbeurs, un adsorbeur devant être régénéré pouvant ainsi être préchauffé par la chaleur provenant d'un autre adsorbeur récemment régénéré. D'après ce document, le meilleur rendement énergétique est obtenu en produisant un courant de recirculation thermique traversant un grand nombre d'adsorbeurs en série, tandis qu'un courant chaud et un courant froid ne sont passés qu'à un seul adsorbeur à la fois (Fig. 3). EP-A-0674142 montre un procédé thermique selon le préambule de la revendication 1 et un système thermique à sorption selon le préambule de la revendication 13.

Selon un mode de réalisation, l'invention fournit un procédé thermique d'adsorption mettant en oeuvre une pluralité de réacteurs d'adsorption comportant un corps adsorbant apte à adsorber un fluide de travail en phase vapeur, dans lequel chacun des réacteurs d'adsorption effectue un cycle de fonctionnement comportant une étape de dépressurisation et d'adsorption pour accroître un taux de remplissage du corps adsorbant par le fluide de travail, et une étape de pressurisation et désorption pour réduire un taux de remplissage du corps adsorbant par le fluide de travail, plusieurs desdits réacteurs effectuant le cycle de fonctionnement de manière décalée dans le temps,

et dans lequel un premier des réacteurs d'adsorption effectue au moins quatre échanges de chaleur au cours du cycle de fonctionnement pour recevoir des flux de chaleur depuis au moins deux autres des réacteurs pendant l'étape de pressurisation et désorption et transférer des flux de chaleur vers au moins deux autres des réacteurs pendant l'étape de dépressurisation et d'adsorption,

un premier échange de chaleur étant effectué entre le premier réacteur dans une phase antérieure de l'étape de dépressurisation et d'adsorption et un deuxième des réacteurs dans une phase postérieure de l'étape de pressurisation et désorption,

un deuxième échange de chaleur étant effectué entre le premier réacteur dans une phase postérieure de l'étape de dépressurisation et d'adsorption et un troisième des réacteurs dans une phase antérieure de l'étape de pressurisation et désorption,

un troisième échange de chaleur étant effectué entre le premier réacteur dans une phase antérieure de l'étape de pressurisation et désorption et le deuxième réacteur dans une phase postérieure de l'étape de dépressurisation et d'adsorption, et

un quatrième échange de chaleur étant effectué entre le premier réacteur dans une phase postérieure de l'étape de pressurisation et désorption et le troisième réacteur dans une phase antérieure de l'étape de dépressurisation et d'adsorption.

Selon un mode de réalisation préféré, chacun des réacteurs d'adsorption effectue au moins quatre échanges de chaleur au cours du cycle de fonctionnement pour recevoir des flux de chaleur depuis au moins deux autres des réacteurs pendant l'étape de pressurisation et désorption et transférer des flux de chaleur vers au moins deux autres des réacteurs pendant l'étape de dépressurisation et d'adsorption.

Selon un mode de réalisation, le premier réacteur effectue au moins six échanges de chaleur au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et d'adsorption,

un cinquième échange de chaleur étant effectué entre le premier réacteur dans une phase intermédiaire de l'étape de dépressurisation et d'adsorption et un quatrième des réacteurs dans une phase intermédiaire de l'étape de pressurisation et désorption,

un sixième échange de chaleur étant effectué entre le premier réacteur dans une phase intermédiaire de l'étape de pressurisation et désorption et le quatrième réacteur dans une phase intermédiaire de l'étape de dépressurisation et d'adsorption.

Les termes antérieur, postérieur et intermédiaire sont utilisés ici dans un sens relatif les uns par rapport aux autres.

De préférence dans ce cas, chacun des réacteurs d'adsorption effectue au moins six échanges de chaleur au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et d'adsorption.

Avantageusement, les cycles de fonctionnement des réacteurs sont décalés de manière à effectuer simultanément, sur une période de temps donnée :

un échange de chaleur entre une première paire de réacteurs, l'un étant dans la phase postérieure de l'étape de dépressurisation et d'adsorption et l'autre étant dans la phase antérieure de l'étape de pressurisation et désorption, au moyen d'une première boucle de circulation de fluide caloporteur et

un échange de chaleur entre une deuxième paire de réacteurs, l'un étant dans la phase antérieure de l'étape de dépressurisation et d'adsorption et l'autre étant dans la phase postérieure de l'étape de pressurisation et désorption, au moyen d'une deuxième boucle de circulation de fluide caloporteur.

Selon un mode de réalisation, un ou chacun des réacteurs effectue un échange de chaleur avec une source froide au moins dans une phase finale de l'étape de dépressurisation et d'adsorption.

Selon un mode de réalisation, un ou chacun des réacteurs effectue un échange de chaleur avec une source chaude au moins dans une phase finale de l'étape de pressurisation et désorption.

Le corps adsorbant peut être de différentes natures. Des corps solides adsorbants sont notamment les zéolithes de type A, X et Y, les charbons actifs, l'alumine active, le gel de silice et leurs mélanges. Les zéolithes sont des corps adsorbants préférés. Selon un mode de réalisation particulier, le corps adsorbant comporte de la zéolite. De la même manière, on peut aussi utiliser un liquide absorbant au lieu d'un corps adsorbant solide.

Le fluide de travail peut être de différentes natures. Des exemples de fluides de travail pouvant être utilisés avec des corps adsorbants précités sont notamment l'eau, l'ammoniac, les alcanes, les alcènes, les alcools et leurs mélanges. Le choix d'un fluide de travail peut être effectué en fonction de l'application, notamment des températures à atteindre. Le choix d'un corps adsorbant approprié est effectué en fonction du fluide de travail. Selon un mode de réalisation particulier, le fluide de travail comporte de l'eau.

Un tel procédé thermique peut servir dans diverses applications. Selon un mode de réalisation particulier, le fluide de travail subit un cycle frigorifique pour produire du froid dans une enceinte d'évaporation.

Selon un mode de réalisation, l'invention fournit également un système thermique à adsorption comportant :

au moins trois réacteurs d'adsorption aptes à fonctionner selon un cycle de fonctionnement de manière mutuellement décalée dans le temps, chaque réacteur comportant :

un corps adsorbant apte à adsorber un fluide de travail en phase vapeur, au moins une conduite de fluide en communication avec le réacteur pour apporter le fluide de travail au réacteur dans une étape de dépressurisation et d'adsorption du cycle de fonctionnement et pour évacuer le fluide de travail du réacteur dans une étape de pressurisation et désorption du cycle de fonctionnement, et un échangeur de chaleur apte à mettre un fluide caloporteur en contact thermique indirect avec le corps adsorbant dans le réacteur,

et un dispositif de circulation de fluide caloporteur relié aux échangeurs de chaleur des différents réacteurs d'adsorption, le dispositif de circulation de fluide caloporteur comprenant des vannes de distribution contrôlées aptes à produire sélectivement des communications de fluide caloporteur entre les échangeurs de chaleur pour transférer des flux de chaleur entre les réacteurs d'adsorption, dans lequel les vannes de distribution sont contrôlées de manière qu'un premier des réacteurs d'adsorption effectue au moins quatre échanges de chaleur au cours du cycle de fonctionnement pour recevoir des flux de chaleur depuis au moins deux autres des réacteurs pendant l'étape de pressurisation et désorption et transférer des flux de chaleur vers au moins deux autres des réacteurs pendant l'étape de dépressurisation et d'adsorption,
un premier échange de chaleur étant effectué entre le premier réacteur dans une phase antérieure de l'étape de dépressurisation et d'adsorption et un deuxième des réacteurs dans une phase postérieure de l'étape de pressurisation et désorption,
un deuxième échange de chaleur étant effectué entre le premier réacteur dans une phase postérieure de l'étape de dépressurisation et d'adsorption et un troisième des réacteurs dans une phase antérieure de l'étape de pressurisation et désorption,
un troisième échange de chaleur étant effectué entre le premier réacteur dans une phase antérieure de l'étape de pressurisation et désorption et le deuxième réacteur dans une phase postérieure de l'étape de dépressurisation et d'adsorption, et
un quatrième échange de chaleur étant effectué entre le premier réacteur dans une phase postérieure de l'étape de pressurisation et désorption et le troisième réacteur dans une phase antérieure de l'étape de dépressurisation et d'adsorption.

Selon un mode de réalisation, un tel système comporte au moins quatre réacteurs d'adsorption, dans lequel les vannes de distribution sont contrôlées de manière que le premier réacteur effectue au moins six échanges de chaleur au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et d'adsorption,
un cinquième échange de chaleur étant effectué entre le premier réacteur dans une phase intermédiaire de l'étape de dépressurisation et d'adsorption et un quatrième des réacteurs dans une phase intermédiaire de l'étape de pressurisation et désorption,
un sixième échange de chaleur étant effectué entre le premier réacteur dans une phase intermédiaire de l'étape de pressurisation et désorption et le quatrième réacteur dans une phase intermédiaire de l'étape de dépressurisation et d'adsorption.
Selon un mode de réalisation, les vannes de distribution sont contrôlées de manière que chacun des réacteurs d'adsorption effectue au moins six échanges de chaleur au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et d'adsorption.
Avantageusement, le dispositif de circulation de fluide caloporteur est apte à produire simultanément au moins deux boucles de circulation de fluide caloporteur indépendantes pour effectuer simultanément :

d'une part, un échange de chaleur entre une première paire de réacteurs, l'un étant dans la phase postérieure de l'étape de dépressurisation et d'adsorption et l'autre étant dans la phase antérieure de l'étape de pressurisation et désorption et,
d'autre part, un échange de chaleur entre une deuxième paire de réacteurs, l'un étant dans la phase antérieure de l'étape de dépressurisation et d'adsorption et l'autre étant dans la phase postérieure de l'étape de pressurisation et désorption.

De préférence dans ce cas, une pompe de circulation est agencée dans chacune des au moins deux boucles de circulation.
Selon d'autres modes de réalisation, un tel système peut présenter une ou plusieurs des caractéristiques suivantes :

- un mélangeur de fluide caloporteur comportant au moins deux entrées connectables aux sorties d'au moins deux des échangeurs de chaleur au moyen des vannes contrôlées et au moins deux sorties connectables aux entrées des au moins deux échangeurs de chaleur au moyen des vannes contrôlées, ledit mélangeur de fluide caloporteur étant apte à mélanger des flux de fluide caloporteur reçus depuis lesdites au moins deux entrées et à distribuer le flux de fluide caloporteur résultant du mélange vers lesdites au moins deux sorties.
- Un dispositif de circulation agencé de manière à effectuer une sélection des flux de fluide caloporteur du côté des réacteurs, chaque échangeur de chaleur comportant une vanne contrôlées de distribution 1 vers N branchée à la sortie de l'échangeur de chaleur et une vanne contrôlées de collecte N vers 1 branchée à l'entrée de l'échangeur de chaleur, N désignant un nombre entier supérieur à 1.
- Un dispositif de circulation agencé de manière à effectuer une sélection des flux de fluide caloporteur du côté opposé aux réacteurs, chaque échangeur de chaleur comportant une conduite de distribution 1 vers M branchée à la sortie de l'échangeur de chaleur et une conduite de collecte M vers 1 branchée à l'entrée de l'échangeur de chaleur, M désignant un nombre entier supérieur à 1, chacune des M branches de la conduite de distribution étant à chaque fois reliée à une entrée respective d'une vanne de collecte respective P vers 1, où P est un nombre entier égal ou supérieur au nombre des réacteurs, chacune des M branches de la conduite de collecte étant à chaque fois reliée à une sortie respective d'une vanne de distribution respective 1 vers P, où P est un nombre entier égal ou supérieur au nombre des réacteurs.

Une idée à la base de l'invention est de diminuer la quantité de chaleur devant être fournie depuis l'extérieur pour faire fonctionner une machine thermique à adsorption.

Certains aspects de l'invention partent de l'idée de décomposer un cycle de fonctionnement d'un réacteur à adsorption en une pluralité de phases successives correspondant à des variations de température assez modérées et de faire fonctionner plusieurs réacteurs de manière décalée dans le temps, pour qu'ils se trouvent simultanément à différentes phases et donc à différentes températures. Certains aspects de l'invention partent de l'idée de réaliser des échanges de chaleurs entre des réacteurs se trouvant à des températures relativement proches, de manière qu'un réacteur effectue, au cours du cycle de fonctionnement, une multitude d'échange de chaleurs successifs à des températures d'équilibre progressivement croissantes et progressivement décroissantes.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :

- La figure 1 est une représentation schématique d'une machine thermique comportant un réacteur d'adsorption.
- La figure 2 est un diagramme température-pression représentant un cycle adsorption-désorption pouvant être mis en oeuvre avec la machine de la figure 1.
- La figure 3 est un diagramme température-chaleur représentant un échange de chaleur pouvant être mis en oeuvre par au moins deux réacteurs d'adsorption effectuant des cycles adsorption-désorption de manière décalée dans le temps.
- La figure 4 est un diagramme température-chaleur représentant des échanges de chaleur pouvant être mis en oeuvre par au moins quatre réacteurs d'adsorption effectuant des cycles adsorption-désorption de manière décalée dans le temps.
- Les figures 5A à 5F sont des diagrammes analogues à la figure 2 représentant des cycles adsorption-désorption mis en oeuvre par trois réacteurs d'adsorption de manière décalée dans le temps.
- La figure 6 est une représentation schématique d'une machine thermique à trois réacteurs d'adsorption, pouvant être utilisée pour mettre en oeuvre les cycles de la figure 5.
- Les figures 7A à 7H sont des diagrammes analogues à la figure 2 représentant des cycles adsorption-désorption mis en oeuvre par quatre réacteurs d'adsorption de manière décalée dans le temps.
- La figure 8 est une représentation schématique d'une machine thermique à quatre réacteurs d'adsorption, pouvant être utilisée pour mettre en oeuvre les cycles de la figure 7.
- La figure 9 est une représentation schématique d'une variante de réalisation d'un groupe de recyclage pouvant être utilisée dans la machine de la figure 8.

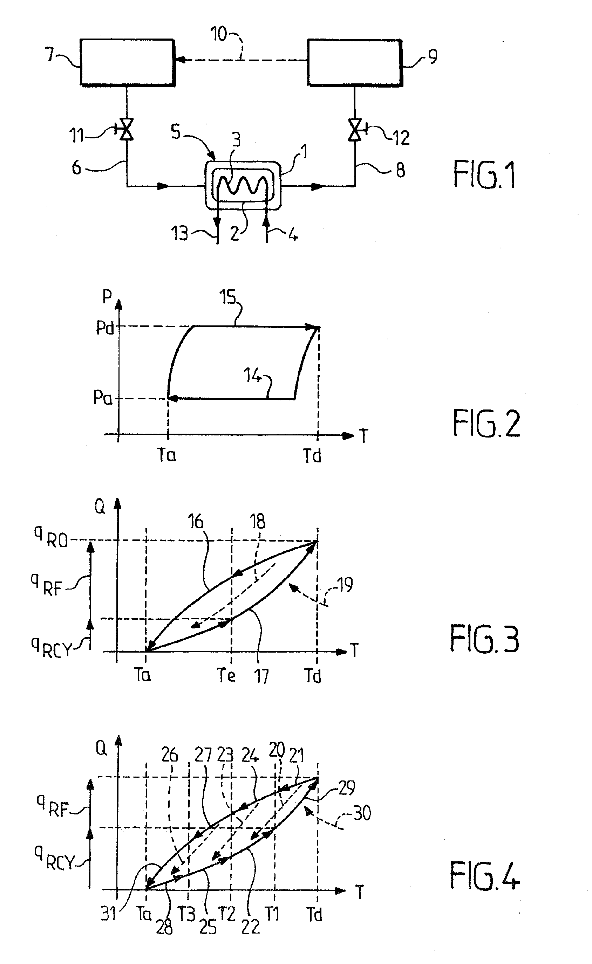

En référence aux figures 1 et 2, on rappelle quelques principes de fonctionnement d'une machine thermique à adsorption. Un réacteur d'adsorption 5 comporte une enceinte étanche au fluide 1 contenant un matériau adsorbant 2 et un échangeur de chaleur 3 capable de fournir ou de retirer de la chaleur depuis ou vers l'extérieur de l'enceinte 1. L'enceinte 1 peut échanger un fluide de travail en phase vapeur avec l'extérieur par l'intermédiaire d'au moins une canalisation.

Le réacteur d'adsorption 5 met en oeuvre un cycle d'adsorption-désorption consistant en un cycle d'échange de chaleur et de matière, à savoir le fluide de travail. Dans une étape de dépressurisation et d'adsorption, dans laquelle le matériau adsorbant 2 est refroidi, le réacteur d'adsorption 5 produit une basse pression capable de pomper le fluide de travail en phase vapeur depuis l'extérieur, par exemple depuis une enceinte d'évaporation 7. Dans une étape de pressurisation et désorption, dans laquelle le matériau adsorbant 2 est chauffé, le réacteur d'adsorption 5 produit une plus haute pression capable de rejeter le fluide de travail en phase vapeur vers l'extérieur, par exemple vers une enceinte de condensation 9. Dans l'exemple représenté à la figure 1, le réacteur d'adsorption 5 est relié à l'enceinte d'évaporation 7 par une canalisation d'aspiration 6 munie d'une vanne de contrôle 11 et à enceinte de condensation 9 par une canalisation de refoulement 8 munie d'une vanne de contrôle 12. Pour utiliser le fluide de travail en circuit fermé, une canalisation de recirculation 10 peut être prévue entre l'enceinte de condensation 9 et l'enceinte d'évaporation 7.

Un exemple de réalisation du cycle d'adsorption-désorption est représenté sur la figure 2. L'étape de dépressurisation et d'adsorption 14 est une phase dans laquelle le matériau adsorbant 2 est refroidi à l'aide de l'échangeur de chaleur 3, la vanne 11 étant le cas échéant ouverte et la vanne 12 fermée. Dans cette étape, le matériau adsorbant se charge avec le fluide de travail. La température du matériau adsorbant 2 diminue de Td à Ta et la pression partielle de fluide de travail diminue de Pd à Pa.

L'étape de pressurisation et désorption 15 est une phase dans laquelle le matériau adsorbant 2 est chauffé à l'aide de l'échangeur de chaleur 3, la vanne 12 étant le cas échéant ouverte et la vanne 11 fermée. Dans cette étape, le matériau adsorbant décharge le fluide de travail. La température du matériau adsorbant 2 progresse de $T_a$ à $T_d > T_a$ et la pression partielle de fluide de travail progresse de $P_a$ à $P_d > P_a$. Puis le cycle peut être répété à l'identique.

Un des principaux et plus importants intérêts que présentent les cycles à adsorption est de fonctionner en utilisant de la chaleur pour l'étape de désorption ou régénération 15. Dans le cas d'un procédé frigorifique, la désorption est effectuée à une pression $P_d$ supérieure à la pression $P_a$ présente lors de l'étape d'adsorption 14, afin que la vapeur soit évacuée vers le condenseur 9 dont la pression est supérieure à celle de l'évaporateur 7. Par conséquent, une régénération évacuant la vapeur vers le condenseur 9 nécessite une élévation de température jusqu'à une température $T_d$, qui est généralement d'au moins une centaine de degrés par rapport à la température d'adsorption $T_a$. La régénération correspond à la phase de compression de la vapeur pour l'envoyer vers le condenseur 9, c'est donc la phase qui consomme de l'énergie.

La température de désorption $T_d$ dépend de la nature du cycle souhaité. Elle est par exemple comprise entre +100°C et +300°C. Ce point présente un grand intérêt car la chaleur à ces températures peut être facilement fournie, soit par chauffage électrique, solaire, ou à combustibles divers (gaz, fuel, bois, etc....), soit par récupération de chaleur perdue, par exemple en sortie d'un moteur thermique, d'une turbine à gaz ou à vapeur, d'une installation nucléaire.

Une machine thermique à adsorption peut mettre en oeuvre plusieurs réacteurs d'adsorption, de préférence de caractéristiques identiques, associés chacun à un évaporateur commun ou distinct et un condenseur commun ou distinct. L'association en parallèle des réacteurs d'adsorption permet de réaliser une machine dont la fonction de pompage est d'avantage ou totalement continue, par rapport à une machine à réacteur unique, dans laquelle les étapes de pompage et de refoulement alternent et sont donc obligatoirement interrompues. Dans une architecture avec plusieurs adsorbeurs en parallèle, ceux-ci doivent réaliser leur cycle d'adsorption-désorption de manière décalée dans le temps.

En référence à la figure 3, on décrit un principe d'échange de chaleur entre deux réacteurs d'adsorption d'une machine thermique, dont l'un doit recevoir de la chaleur pour sa phase de pressurisation-désorption, et dont l'autre doit évacuer de la chaleur pour sa phase de dépressurisation-adsorption. Cet échange peut se faire naturellement à la condition que le réacteur d'adsorption en phase de chauffe soit à une température inférieure à celui en phase de refroidissement et aussi longtemps que leurs températures ne s'égalent pas.

La figure 3 est un diagramme température-chaleur représentant le cycle, supposé identique pour les deux réacteurs, que ceux-ci effectuent en opposition de phase l'un avec l'autre. Ainsi, un des deux réacteurs d'adsorption ayant fini sa phase d'adsorption, représentée par la courbe 16, se trouve à la température basse $T_a$, par exemple +40°C, et doit être régénéré. Au même instant, l'autre réacteur d'adsorption ayant fini la phase de désorption, représentée par la courbe 17, se trouve à la température haute $T_d$, par exemple +200°C, et doit être refroidi pour commencer une phase d'adsorption.

Comme représentée par la flèche 18, une certaine quantité de chaleur $q_{RCY}$ peut être fournie par le réacteur d'adsorption initialement à +200°C pour simultanément se refroidir et chauffer le réacteur d'adsorption initialement à +40°C. Le transfert de chaleur peut s'effectuer naturellement jusqu'à une température d'équilibre $T_e$, située par exemple dans une plage de l'ordre de +100 à +140°C.

La condition nécessaire pour réaliser une telle étape de recyclage de chaleur entre deux réacteurs d'adsorption est que l'un soit dans la phase de pressurisation-désorption à une température inférieure à l'autre qui est dans la phase de dépressurisation-adsorption. L'action consistant à échanger de la chaleur entre des réacteurs d'adsorption de la machine thermique est appelée ci-dessous recyclage interne de chaleur.

Le recyclage interne de chaleur présente deux intérêts majeurs. D'une part, comme visible sur la figure 2, la chaleur $q_{RO}$ à fournir pour régénérer un réacteur d'adsorption est obtenue pour une partie $q_{RCY}$ depuis l'intérieur de la machine thermique, de sorte qu'il ne reste qu'une partie $q_{RF}$ à fournir depuis l'extérieur, comme indiqué par la flèche 19. La consommation énergétique de la machine est donc réduite. D'autre part, la quantité de chaleur rejetée par la machine vers l'environnement extérieur est réduite dans les mêmes proportions.

Le rendement énergétique COP de la machine thermique comportant plusieurs réacteurs d'adsorption peut être décrit avec les paramètres suivants :

- $Q_{RO}$ : quantité de chaleur nécessaire à la régénération de la quantité totale d'adsorbant présente dans la machine au cours d'un cycle de fonctionnement,
- $Q_{RCY}$ : quantité de chaleur globale recyclée en interne
- $Q_{RF}$ : quantité de chaleur finale restant à apporter depuis l'extérieur pour compléter la régénération au cours d'un cycle

$$Q_{RF} = Q_{RCY} + Q_{RO}$$

- HRF : taux de recyclage ou de récupération de chaleur

$$\text{HRF} = Q_{RCY}/Q_{RO} = 1 - \frac{Q_{RF}}{Q_{RO}}$$

Dans le cas d'une machine frigorifique ou d'une pompe à chaleur, le rendement énergétique COP est le rapport entre la quantité frigorifique (ou quantité de chauffage) développée $Q_{fr}$ et la quantité d'énergie à fournir pour obtenir cette quantité frigorifique. Cette quantité à fournir est essentiellement la quantité de chaleur nécessaire à la régénération réacteurs d'adsorption, soit $Q_{RO}$.

Sans recyclage, on a :

$$\text{COP}_0 = Q_{fr}/Q_{RO}$$

Le rendement énergétique de la machine avec recyclage est donc donné par :

$$COP_f = Q_{fr}/Q_{RF} = COP_0 \, (1 - HRF)$$

Dans une machine thermique comportant N réacteurs d'adsorption identiques, N>1, on aura :

$$Q_{RF} = N.q_{RF} \,; Q_{RO} = N.q_{RO} \,; Q_{RCY} = N.q_{RCY}$$

Dans une architecture de machine comportant quatre réacteurs d'adsorption ou plus, plusieurs échanges de chaleur entre réacteurs peuvent être réalisés en même temps pour accroître le taux de recyclage HRF. Une situation de ce type est illustrée par la figure 4, qui représente, dans un diagramme similaire à la figure 3, un cycle de fonctionnement suivi par au moins quatre réacteurs d'adsorption de manière mutuellement décalée. En présence de six réacteurs, trois recyclages de chaleur simultanés sont possibles :

- Un échange de chaleur 20 a lieu entre un réacteur dans une phase antérieure 21 de l'étape de dépressurisation et d'adsorption et un réacteur dans une phase postérieure 22 de l'étape de pressurisation et désorption, jusqu'à une température d'équilibre haute $T_1$.
- Un échange de chaleur 23 a lieu entre un réacteur dans une phase intermédiaire 24 de l'étape de dépressurisation et d'adsorption et un réacteur dans une phase intermédiaire 25 de l'étape de pressurisation et désorption, jusqu'à une température d'équilibre intermédiaire $T_2$.
- Un échange de chaleur 26 a lieu entre un réacteur dans une phase postérieure 27 de l'étape de dépressurisation et d'adsorption et un réacteur dans une phase antérieure 28 de l'étape de pressurisation et désorption, jusqu'à une température d'équilibre basse $T_3$.

En présence de quatre réacteurs, seulement deux parmi les trois échanges de chaleur 20, 23 et 26 peuvent avoir lieu simultanément.

Dans l'étape de pressurisation et désorption d'un réacteur, seule la phase finale 29 nécessite donc l'apport d'une quantité de chaleur externe 30, par exemple depuis une source chaude quelconque à une température supérieure ou égale à $T_d$. De même, dans l'étape de dépressurisation et d'adsorption d'un réacteur, la phase finale 31 nécessite le rejet d'une quantité de chaleur vers l'extérieur, par exemple vers une source froide quelconque à une température inférieure ou égale à $T_a$.

Il résulte de la décomposition des étapes d'adsorption et de désorption en plusieurs phases successives et de la réalisation des multiples échanges de chaleur correspondants que le taux de recyclage HRF de la machine ainsi constituée peut être nettement amélioré. Cette amélioration est visible qualitativement à partir des quantités de chaleur $q_{RCY}$ et $q_{RF}$ représentées sur la figure 4.

Plus généralement, en respectant le déphasage nécessaire et une séquence particulière des connexions entre échangeurs 3, chaque étape de recyclage permet de réaliser l'échange d'une quantité de chaleur à un niveau de température d'équilibre différent. Par conséquent, d'un point de vue énergétique, toute la chaleur nécessaire pour atteindre la plus haute température d'équilibre, n'aura pas à être fournie depuis l’extérieur, car elle est recyclée à l'intérieur de la machine. Seule la quantité de chaleur nécessaire pour aller de cette plus haute température d'équilibre de recyclage jusqu'à la température de désorption finale doit être fournie depuis l'extérieur. La quantité globale de chaleur recyclée en interne est donc d'autant plus importante que la masse totale d'adsorbant est fractionnée en plusieurs réacteurs identiques déphasés. Le facteur de récupération HRF croît avec le nombre N de phases ou, en d'autres termes avec le nombre de réacteurs déphasés deux à deux. Par conséquent, la quantité de chaleur à apporter depuis l'extérieur en sera d'autant réduite, ce qui se traduit par une économie d'énergie.

En revenant à l'exemple d'un procédé frigorifique par évaporation d'eau à 0°C par adsorption sur zéolithe, les rendements énergétiques pouvant être obtenus en fonction des recyclages de chaleur mis en oeuvre sont consignés dans le tableau 1. Un bilan similaire peut être fait pour un fonctionnement en pompe à chaleur.

Tableau 1 : rendement énergétique d'un procédé frigorifique en fonction des recyclages de chaleur

| Nombre de réacteurs déphasés (N) | Nombre de niveaux de recyclage | HRF | COP |
|---|---|---|---|
| 1 | 0 | 0 | Environ 0,5 |
| 2 | 1 | Environ 40% | Environ 0,85 |
| 3 | 2 | Environ 55% | Environ 1,1 |
| 4 | 3 | Environ 60% | Environ 1,25 |

Les échanges de chaleur 20, 23 et 26 peuvent être effectués au moyen de plusieurs boucles de circulation de fluide caloporteur. Selon un mode de réalisation, chaque boucle de circulation implique une seule et unique paire de réacteurs d'adsorption à la fois et chaque réacteur d'adsorption est impliqué dans une seule et unique boucle de circulation à la fois.

La ou chaque boucle de circulation relie les échangeurs de chaleur 3 des réacteurs correspondants pour chauffer ou refroidir le corps adsorbant 2 de manière homogène. Comme visible sur la figure 1, l'échangeur 3 d'un réacteur dispose pour cela de deux connexions hydrauliques pour le fluide caloporteur, à savoir une entrée 4 et une sortie 13.

Dans la machine thermique, le ou les circuits de fluide caloporteur doivent pouvoir relier l'échangeur de chaleur 3 de chaque réacteur d'adsorption à trois types de sources de chaleur différentes :

- un réchauffeur permettant de fournir de la chaleur jusqu'à la haute température $T_d$ pour la désorption,
- un refroidisseur permettant de refroidir jusqu'à la basse température $T_a$ pour l'adsorption,
- l'échangeur de chaleur 3 d'un autre réacteur d'adsorption, soit pour lui fournir, soit pour en recevoir de la chaleur.

Pour cela, selon un mode de réalisation, la machine thermique comporte un unique circuit caloporteur comprenant un groupe de chauffe, un groupe de refroidissement, un ou plusieurs groupes de recyclage et un dispositif de distribution du fluide caloporteur permettant d'établir toutes les connexions fluides nécessaires entre ces groupes.

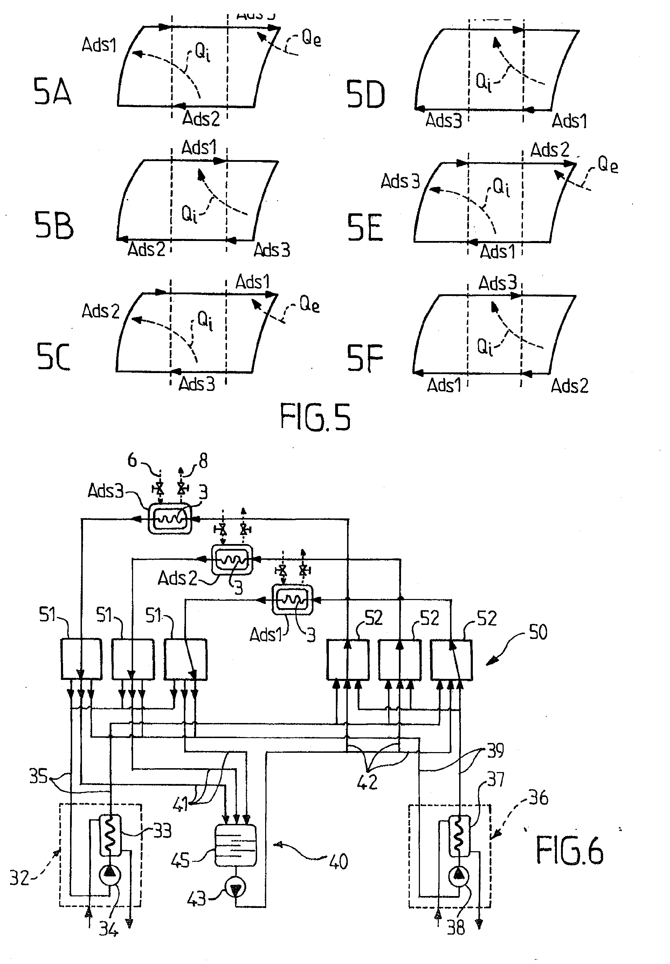

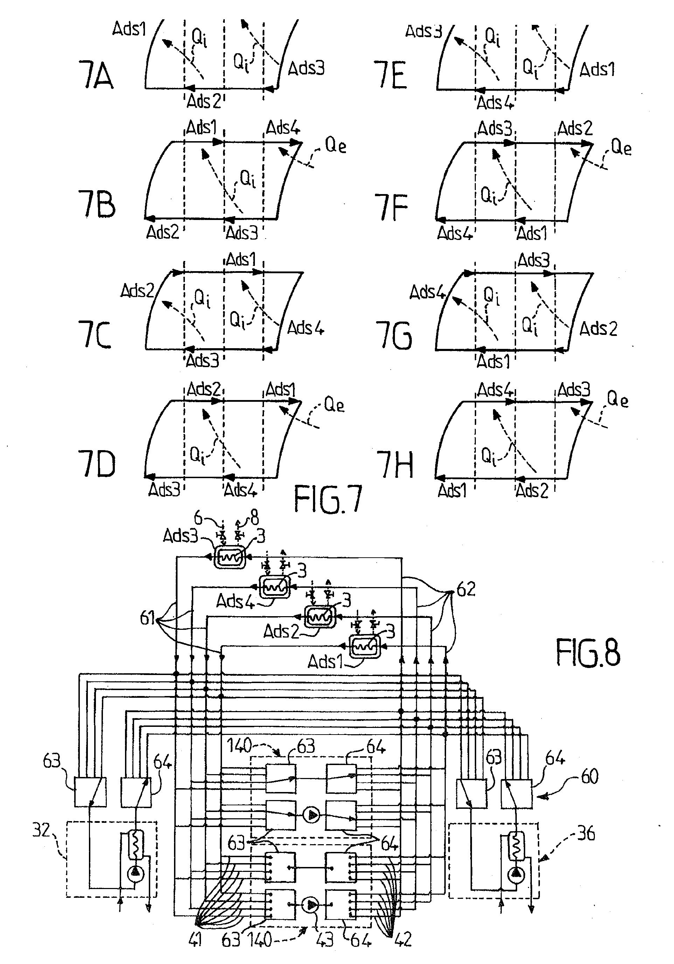

Le groupe de chauffe permet de faire circuler le fluide caloporteur à la température haute de désorption $T_d$ au travers des échangeurs de chaleur de chaque réacteur d'adsorption de la machine, de préférence un par un. Selon un mode de réalisation représenté sur les figures 6 et 8, le groupe de chauffe 32 comporte un réchauffeur 33 pour chauffer le fluide caloporteur, une pompe de circulation 34 pour faire circuler fluide caloporteur et une conduite 35 reliée à un dispositif de distribution du fluide caloporteur permettant de connecter sélectivement le groupe de chauffe 32 à chaque réacteur d'adsorption, de préférence un par un. Le rôle du groupe de chauffe est de finir l'étape de désorption jusqu'à la température de désorption $T_d$, par apport de chaleur depuis l'extérieur.

Le groupe de refroidissement permet de faire circuler le fluide caloporteur à la température basse d'adsorption $T_a$ au travers des échangeurs de chaleur de chaque réacteur d'adsorption de la machine, de préférence un par un. Selon un mode de réalisation représenté sur les figures 6 et 8, le groupe de refroidissement 36 comporte un refroidisseur 37 pour refroidir le fluide caloporteur, une pompe de circulation 38 pour faire circuler le fluide caloporteur et une conduite 39 reliée à un dispositif de distribution du fluide caloporteur permettant de connecter sélectivement le groupe de refroidissement 36 à chaque réacteur d'adsorption, de préférence un par un. Le rôle du groupe de refroidissement est de finir l'étape d'adsorption d'un réacteur par évacuation de chaleur vers l'extérieur.

Un groupe de recyclage permet de faire circuler le fluide caloporteur entre toute paire de réacteurs d'adsorption de la machine devant échanger la chaleur. Selon des modes de réalisation représentés sur les figures 6 et 8, un groupe de recyclage 40 ou 140 comporte plusieurs entrées 41, plusieurs sorties 42 et une pompe de circulation 43 pour faire circuler le fluide caloporteur. Un dispositif de distribution du fluide caloporteur permet de connecter deux entrées 41 respectives aux sorties des deux réacteurs d'adsorption respectifs devant échanger la chaleur et deux sorties 42 respectives aux entrées des deux réacteurs d'adsorption respectifs, de manière à créer une boucle de circulation de fluide caloporteur entre les échangeurs de chaleur 3 des deux réacteurs d'adsorption. Le rôle d'un groupe de recyclage est d'échanger le plus possible de chaleur entre deux réacteurs d'adsorption qui nécessitent respectivement d'être chauffé et refroidi.

Selon un mode de réalisation, dans une machine thermique comportant N réacteurs d'absorption mutuellement déphasés, il est prévu des groupes de recyclage au nombre de E(N/2), où E( ) désigne la partie entière du nombre.

Selon une variante de réalisation, en dehors du groupe de chauffe à température haute de désorption $T_d$, une ou plusieurs autres sources de chaleur à des températures intermédiaires peuvent être utilisées pour fournir une partie de la chaleur de régénération d'un réacteur d'adsorption, soit entre deux phases de recyclage, soit au cours même d'un recyclage.

Dans le cas de cycles d'adsorption utilisant une température basse d'adsorption $T_a$ inférieure à la température ambiante atmosphérique, l'atmosphère ambiante peut être utilisée comme source de refroidissement intermédiaire pour prélever une partie de la chaleur d'adsorption d'un réacteur d'adsorption, soit entre deux phases de recyclage, soit au cours même d'un recyclage. L'atmosphère peut aussi jouer un rôle de source de chauffage intermédiaire.

Le dispositif de distribution du fluide caloporteur peut être conçu de plusieurs manières. D'une manière générale, le dispositif de distribution de fluide permet de former à chaque fois une boucle fermée de circulation entre un des réacteurs d'adsorption et une source respective, la source comportant en fait un autre réacteur d'adsorption dans le cas d'une boucle de recyclage.

Dans un mode de réalisation représenté sur la figure 6, le dispositif de distribution de fluide 50 effectue une sélection des flux de fluide caloporteur du côté des réacteurs d'adsorption. Pour cela, chaque échangeur de chaleur 3 comporte une vanne de distribution 51, de type 1 vers M, branchée à la sortie de l'échangeur de chaleur 3 et une vanne de collecte 52, de type M vers 1, branchée à l'entrée de l'échangeur de chaleur 3. Le rôle des vannes 51 et 52 est à chaque fois de connecter le réacteur d'adsorption à un unique groupe choisi parmi les groupes de chauffe, de refroidissement et de recyclage de la machine. M désigne un nombre entier supérieur ou égal au nombre total des groupes, selon la configuration des groupes de recyclage. Dans l'exemple de la figure 6, M=3 pour un nombre de groupes égal à 3.

Dans un mode de réalisation représenté sur la figure 8, le dispositif de distribution de fluide 60 effectue une sélection des flux de fluide caloporteur du côté des groupes. Pour cela, chaque échangeur de chaleur 3 comporte une conduite de distribution 61, de type 1 vers M, branchée à la sortie de l'échangeur de chaleur et une conduite de collecte 62, de type M vers 1, branchée à l'entrée de l'échangeur de chaleur. M désigne un nombre entier supérieur ou égal au nombre total des groupes, selon la configuration des groupes de recyclage. Deux groupes de recyclage 140 indépendants l'un de l'autre sont prévus sur la figure 8. Chacune des M branches d'une conduite de distribution 61 est reliée à une entrée respective d'une vanne de collecte respective 63, de type N vers 1, où N est le nombre des réacteurs. Chacune des M branches d'une conduite de collecte 62 est reliée à une sortie respective d'une vanne de distribution respective 64, de type 1 vers N. Dans l'exemple de la figure 8, N=4 et M=6 pour un nombre de groupes égal à 4.

Selon une variante de réalisation, le dispositif de distribution de fluide peut aussi combiner ces deux principes de distribution.

Dans le cas du recyclage de chaleur, l'échange de chaleur est réalisé par convection dans une boucle fermée de circulation de fluide caloporteur reliant les deux échangeurs de chaleur 3 concernés. Pour cela, plusieurs modes de réalisation du groupe de recyclage sont possibles.

Dans un mode de réalisation représenté à la figure 8, un groupe de recyclage 140 réalise une circulation en série entre les échangeurs de chaleur 3 des deux réacteurs concernés. Le groupe de recyclage connecte à la fois la sortie d'un premier échangeur à l'entrée du deuxième échangeur et la sortie du deuxième à l'entrée du premier. La pompe 43 assure la circulation dans cette boucle de circulation, laquelle passe donc deux fois par le groupe de recyclage 140.

Dans un mode de réalisation représenté à la figure 6, le groupe de recyclage 40 réalise une circulation en parallèle à travers les échangeurs 3 des deux réacteurs concernés. Les flux sortant des deux échangeurs 3 sont mélangés dans le mélangeur 45, puis le flux résultant du mélange est renvoyé vers les entrées des deux échangeurs 3 en parallèle avec des débits égaux. La pompe 43 positionnée au niveau du mélangeur 45 est chargée de la circulation. Afin d'obtenir un échange le plus efficace possible, il peut être prévu un dispositif permettant d'assurer un débit également réparti dans les deux sorties parallèles actives 42.

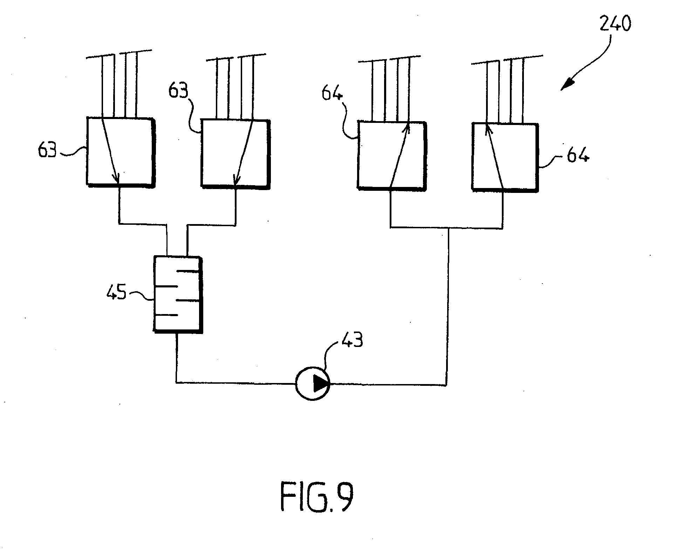

Ces modes de réalisation du groupe de recyclage peuvent aussi être combinés. En référence à la figure 9, on a représenté un groupe de recyclage 240 à circulation parallèle pouvant être substitué à un groupe de recyclage 140 de la figure 8, pour réaliser la même fonction. Les éléments précédemment décrits sont désignés par les mêmes chiffres de référence sur la figure 9.

Dans des modes de réalisation, une machine thermique comporte un groupe d'adsorption composé de N>2 réacteurs d'adsorption, de préférence identiques. La période de cycle total est désignée par D. Afin d'obtenir une fonction adsorption-désorption la plus continue et constante possible au niveau du groupe d'adsorption, chaque réacteur d'adsorption effectue le même cycle de manière déphasée par rapport aux autres. Par conséquent sur le groupe de N réacteurs, le déphasage est de D/N.

Chaque réacteur d'adsorption réalise au maximum 2.N échanges de chaleur au cours d'un cycle complet :

- pendant l'étape de pressurisation-désorption, au plus N-1 échanges avec ceux des autres réacteurs qui sont à des températures supérieures, afin de recevoir de la chaleur.
- 1 échange avec le groupe de chauffe.
- pendant l'étape de dépressurisation et d'adsorption, au plus N-1 échanges avec ceux des autres réacteurs qui sont à des températures inférieures, afin de leur céder de la chaleur.
- 1 échange avec le groupe de refroidissement.

Au cours d'un cycle le nombre d'étape de recyclage d'un réacteur d'adsorption atteint donc de préférence 2N - 2. Le nombre de niveaux de températures d'équilibre est N-1.

Les figures 5A à 5F représentent, dans une représentation similaire à la figure 2, des phases successives d'un cycle de fonctionnement optimisé selon ces principes, pour une machine thermique à trois réacteurs Ads1, Ads 2 et Ads3, telle que celle représentée sur la figure 6. Le tableau 2 ci-dessous représente les connexions devant être réalisées à chaque phase par le dispositif de distribution 50. La commande des vannes 51 et 52 peut être réalisée de manière correspondante par un automate programmé. La figure 6 représente ces vannes dans un état correspondant à la figure 5F.

Les figures 7A à 7H représentent des phases successives d'un cycle de fonctionnement optimisé selon ces principes, pour une machine thermique à quatre réacteurs Ads1, Ads 2, Ads3 et Ads4, telle que celle représentée sur la figure 8. Le tableau 3 ci-dessous représente les connexions devant être réalisées à chaque phase par le dispositif de distribution 60. La commande des vannes 63 et 64 peut être réalisée de manière correspondante par un automate programmé. La figure 8 représente ces vannes dans un état correspondant à la figure 7H. L'un des deux groupes de recyclage 140 est alors dans un état bloquant ou état d'isolement.

Ces séquences correspondent au fonctionnement nominal en régime établi des cycles d'échange de chaleur permettant de produire le cycle d'adsorption souhaité. Les flèches Qe désignent des apports de chaleur depuis l'extérieur, par exemple par le groupe de chauffe. Les flèches Qi désignent des échanges de chaleur entre réacteurs.

Plus généralement, selon un mode de réalisation préféré, les principes de construction d'une séquence de connexions pour N réacteurs d'adsorption sont les suivants :

- pour un cycle de période D, pour N réacteurs décalés mutuellement de D/N, le cycle est composé de 2N phases : N phases dans l'étape de pressurisation-désorption et N phases dans l'étape de dépressurisation-adsorption.
- toutes les phases ont même durée et permutent en même temps avec une période de D/(2N).
- à tout moment du cycle, les réacteurs sont décalés les uns des autres de D/N.

Ainsi, pendant l'étape de pressurisation-désorption, un réacteur peut soit être chauffé avec le groupe de chauffe jusqu'à la température de désorption Td, soit recycler la chaleur avec un autre réacteur effectuant l'étape de dépressurisation-adsorption et se trouvant à une température plus haute que le premier. De même, pendant l'étape de dépressurisation-adsorption, un réacteur peut soit être refroidi avec le groupe de refroidissement jusqu'à la température d'adsorption Ta, soit recycler la chaleur avec un autre réacteur effectuant l'étape de pressurisation-désorption et se trouvant à une température plus basse que ce premier.

Sans changer les principes de fonctionnement d'une telle machine, il est possible de prévoir des groupes de réacteurs d'adsorption, les réacteurs étant en phase au sein d'un groupe et les groupes effectuant le cycle de manière mutuellement décalée. La puissance de la machine peut ainsi être augmentée.

Dans d'autres modes de réalisation, tout phénomène de sorption d'un fluide de travail par un corps sorbant, notamment l'absorption du fluide de travail par un liquide absorbant, peut être exploité de la même manière pour réaliser des machines et des procédés thermiques. Des exemples de corps liquides absorbants sont le bromure de lithium et l'eau. Des fluides de travail adaptés à ces corps absorbants peuvent être trouvés parmi les exemples précités, notamment l'ammoniac $NH_3$.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

Tableau 2 : échanges de chaleur réalisés dans un cycle de fonctionnement à trois réacteurs d'adsorption

| Phase (Fig.)/ Réacteur | Ads1 | Ads2 | Ads3 |
|---|---|---|---|
| 5A | RCY 1&2 | RCY 2&1 | H |
| 5B | RCY 1&3 | C | RCY 3&1 |
| 5C | H | RCY2&3 | RCY 3&2 |
| 5D | RCY1&2 | RCY2&1 | C |
| 5E | RCY 1&3 | H | RCY 3&1 |
| 5F | C | RCY 2&3 | RCY 3&2 |

H désigne une connexion au groupe de chauffe. C désigne une connexion au groupe de refroidissement. RCY i&j désigne la connexion des réacteurs i et j à un même groupe de recyclage.

Tableau 3 : échanges de chaleur réalisés dans un cycle de fonctionnement à quatre réacteurs d'adsorption

| Phase (Fig.)/ Réacteur | Ads1 | Ads2 | Ads3 | Ads4 |
|---|---|---|---|---|
| 7A | RCY 1&2 | RCY 2&1 | RCY 3&4 | RCY 4&3 |
| 7B | RCY 1&3 | H | RCY 3&1 | C |
| 7C | RCY 1&4 | RCY 2&3 | RCY 3&2 | RCY 4&1 |
| 7D | C | RCY 2&4 | H | RCY 4&2 |
| 7E | RCY 1&2 | RCY 2&1 | RCY 3&4 | RCY 4&3 |
| 7F | RCY 1&3 | C | RCY 3&1 | H |
| 7G | RCY 1&4 | RCY 2&3 | RCY 3&2 | RCY 4&1 |
| 7H | H | RCY 2&4 | C | RCY 4&2 |

H désigne une connexion au groupe de chauffe. C désigne une connexion au groupe de refroidissement. RCY i&j désigne la connexion des réacteurs i et j à un même groupe de recyclage.

**Revendications**

1. Procédé thermique de sorption mettant en oeuvre une pluralité de réacteurs de sorption (5, Ads1, Ads2, Ads3) comportant un corps sorbant apte à sorber un fluide de travail en phase vapeur,
dans lequel chacun des réacteurs de sorption effectue un cycle de fonctionnement comportant une étape de dépressurisation et de sorption (14) pour accroître un taux de remplissage du corps sorbant par le fluide de travail, et une étape de pressurisation et désorption (15) pour réduire un taux de remplissage du corps sorbant par le fluide de travail, plusieurs desdits réacteurs effectuant le cycle de fonctionnement de manière décalée dans le temps, **caractérisé en ce qu'**un premier des réacteurs de sorption (Ads1) effectue au moins quatre échanges de chaleur au cours du cycle de fonctionnement pour recevoir des flux de chaleur depuis au moins deux autres des réacteurs (Ads2, Ads3, Ads4) pendant l'étape de pressurisation et désorption et transférer des flux de chaleur vers au moins deux autres des réacteurs (Ads2, Ads3, Ads4) pendant l'étape de dépressurisation et de sorption,
un premier échange de chaleur (Qi, Fig. 5D ; Qi, Fig. 7E) étant effectué entre le premier réacteur dans une phase antérieure de l'étape de dépressurisation et de sorption et un deuxième des réacteurs (Ads2) dans une phase postérieure de l'étape de pressurisation et désorption,
un deuxième échange de chaleur (Qi, Fig. 5E ; Qi, Fig. 7G) étant effectué entre le premier réacteur dans une phase postérieure de l'étape de dépressurisation et de sorption et un troisième des réacteurs (Ads3 ; Ads4) dans une phase antérieure de l'étape de pressurisation et désorption,
un troisième échange de chaleur (Qi, Fig. 5A ; Qi, Fig. 7A) étant effectué entre le premier réacteur dans une phase antérieure de l'étape de pressurisation et désorption et le deuxième réacteur dans une phase postérieure de l'étape de dépressurisation et de sorption, et
un quatrième échange de chaleur (Qi, Fig. 5B ; Qi, Fig. 7C) étant effectué entre le premier réacteur dans une phase postérieure de l'étape de pressurisation et désorption et le troisième réacteur dans une phase antérieure de l'étape de dépressurisation et de sorption.

2. Procédé selon la revendication 1, dans lequel chacun des réacteurs de sorption effectue au moins quatre échanges de chaleur (Qi) au cours du cycle de fonctionnement pour recevoir des flux de chaleur depuis au moins deux autres des réacteurs pendant l'étape de pressurisation et désorption et transférer des flux de chaleur vers au moins deux autres des réacteurs pendant l'étape de dépressurisation et de sorption.

3. Procédé selon l'une des revendications 1 à 2, dans lequel le premier réacteur (Ads1) effectue au moins six échanges de chaleur au cours du cycle de fonctionnement pour recevoir des flux de chaleur depuis au moins trois autres des réacteurs (Ads2, Ads3, Ads4) pendant l'étape de pressurisation et désorption et transférer des flux de chaleur vers au moins trois autres des réacteurs (Ads2, Ads3, Ads4) pendant l'étape de dépressurisation et de sorption, un cinquième échange de chaleur (Qi, Fig. 7F) étant effectué entre le premier réacteur dans une phase intermédiaire de l'étape de dépressurisation et de sorption et un quatrième des réacteurs (Ads3) dans une phase intermédiaire de l'étape de pressurisation et désorption, un sixième échange de chaleur (Qi, Fig. 7B) étant effectué entre le premier réacteur dans une phase intermédiaire de l'étape de pressurisation et désorption et le quatrième réacteur dans une phase intermédiaire de l'étape de dépressurisation et de sorption.

4. Procédé selon la revendication 3, dans lequel chacun des réacteurs de sorption effectue au moins six échanges de chaleur (Qi, Fig. 7) au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et de sorption.

5. Procédé selon la revendication 4, dans lequel les cycles de fonctionnement des réacteurs sont décalés de manière à effectuer simultanément, sur une période de temps donnée (7A) :

un échange de chaleur (Qi) entre une première paire de réacteurs (Ads2, Ads1), l'un étant dans la phase postérieure de l'étape de dépressurisation et de sorption et l'autre étant dans la phase antérieure de l'étape de pressurisation et désorption, au moyen d'une première boucle de circulation de fluide caloporteur (140) et un échange de chaleur entre une deuxième paire de réacteurs (Ads3, Ads4), l'un étant dans la phase antérieure de l'étape de dépressurisation et de sorption et l'autre étant dans la phase postérieure de l'étape de pressurisation et désorption, au moyen d'une deuxième boucle de circulation de fluide caloporteur (140).

6. Procédé selon l'une des revendications 1 à 5, dans lequel le premier réacteur effectue un échange de chaleur avec une source froide au moins dans une phase finale (7H) de l'étape de dépressurisation et de sorption.

7. Procédé selon l'une des revendications 1 à 6, dans lequel le premier réacteur effectue un échange de chaleur avec une source chaude au moins dans une phase finale (7D) de l'étape de pressurisation et désorption.

8. Procédé selon l'une des revendications 1 à 7, dans lequel le fluide de travail comporte de l'eau.

9. Procédé selon l'une des revendications 1 à 8, dans lequel le fluide de travail subit un cycle frigorifique pour produire du froid dans une enceinte d'évaporation (7).

10. Procédé selon l'une des revendications 1 à 9, dans lequel le corps sorbant (2) est un corps adsorbant.

11. Procédé selon la revendication 10, dans lequel le corps adsorbant (2) comporte de la zéolite.

12. Procédé selon l'une des revendications 1 à 9, dans lequel le corps sorbant (2) est un liquide absorbant.

13. Système thermique à sorption comportant :

au moins trois réacteurs de sorption (Ads1, Ads2, Ads3, Ads4) aptes à fonctionner selon un cycle de fonctionnement de manière mutuellement décalée dans le temps, chaque réacteur comportant :

un corps sorbant (2) apte à sorber un fluide de travail en phase vapeur,
au moins une conduite de fluide (6, 8) en communication avec le réacteur pour apporter le fluide de travail au réacteur dans une étape de dépressurisation et de sorption du cycle de fonctionnement et pour évacuer le fluide de travail du réacteur dans une étape de pressurisation et désorption du cycle de fonctionnement, et

un échangeur de chaleur (3) apte à mettre un fluide caloporteur en contact thermique indirect avec le corps sorbant dans le réacteur,

et un dispositif de circulation de fluide caloporteur (50, 60) relié aux échangeurs de chaleur des différents réacteurs de sorption, **caractérisé en ce que** le dispositif de circulation de fluide caloporteur comprend des vannes de distribution contrôlées (51, 52; 63, 64) aptes à produire sélectivement des communications de fluide caloporteur entre les échangeurs de chaleur pour transférer des flux de chaleur entre les réacteurs de sorption, dans lequel les vannes de distribution sont contrôlées de manière qu'un premier des réacteurs de sorption effectue au moins quatre échanges de chaleur au cours du cycle de fonctionnement pour recevoir des flux de chaleur depuis au moins deux autres des réacteurs pendant l'étape de pressurisation et désorption et transférer des flux de chaleur vers au moins deux autres des réacteurs pendant l'étape de dépressurisation et de sorption, un premier échange de chaleur étant effectué entre le premier réacteur dans une phase antérieure de l'étape de dépressurisation et de sorption et un deuxième des réacteurs dans une phase postérieure de l'étape de pressurisation et désorption, un deuxième échange de chaleur étant effectué entre le premier réacteur dans une phase postérieure de l'étape de dépressurisation et de sorption et un troisième des réacteurs dans une phase antérieure de l'étape de pressurisation et désorption, un troisième échange de chaleur étant effectué entre le premier réacteur dans une phase antérieure de l'étape de pressurisation et désorption et le deuxième réacteur dans une phase postérieure de l'étape de dépressurisation et de sorption, et un quatrième échange de chaleur étant effectué entre le premier réacteur dans une phase postérieure de l'étape de pressurisation et désorption et le troisième réacteur dans une phase antérieure de l'étape de dépressurisation et de sorption.

14. Système selon la revendication 13, comportant au moins quatre réacteurs de sorption, dans lequel les vannes de distribution sont contrôlées de manière que le premier réacteur effectue au moins six échanges de chaleur au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et de sorption, un cinquième échange de chaleur étant effectué entre le premier réacteur dans une phase intermédiaire de l'étape de dépressurisation et de sorption et un quatrième des réacteurs dans une phase intermédiaire de l'étape de pressurisation et désorption, un sixième échange de chaleur étant effectué entre le premier réacteur dans une phase intermédiaire de l'étape de pressurisation et désorption et le quatrième réacteur dans une phase intermédiaire de l'étape de dépressurisation et de sorption.

15. Système selon la revendication 14, dans lequel les vannes de distribution sont contrôlées de manière que chacun des réacteurs de sorption effectue au moins six échanges de chaleur au cours du cycle de fonctionnement pour recevoir des flux de chaleur depuis au moins trois autres des réacteurs pendant l'étape de pressurisation et désorption et transférer des flux de chaleur vers au moins trois autres des réacteurs pendant l'étape de dépressurisation et de sorption.

16. Système selon la revendication 15, dans lequel le dispositif de circulation de fluide caloporteur est apte à produire simultanément au moins deux boucles de circulation de fluide caloporteur indépendantes (140) pour effectuer simultanément :

d'une part, un échange de chaleur entre une première paire de réacteurs, l'un étant dans la phase postérieure de l'étape de dépressurisation et de sorption et l'autre étant dans la phase antérieure de l'étape de pressurisation et désorption et,

d'autre part, un échange de chaleur entre une deuxième paire de réacteurs, l'un étant dans la phase antérieure de l'étape de dépressurisation et de sorption et l'autre étant dans la phase postérieure de l'étape de pressurisation et désorption.

17. Système selon la revendication 16, dans lequel un pompe de circulation (43) est agencée dans chacune des au moins deux boucles de circulation (140).

18. Système selon l'une des revendications 13 à 17, dans lequel le dispositif de circulation comporte un mélangeur de fluide caloporteur (45) comportant au moins deux entrées (41) connectables aux sorties d'au moins deux des échangeurs de chaleur (3) au moyen des vannes contrôlées (51, 63) et au moins deux sorties (42) connectables aux entrées des au moins deux échangeurs de chaleur au moyen des vannes contrôlées (52, 64), ledit mélangeur de fluide caloporteur étant apte à mélanger des flux de fluide caloporteur reçus depuis lesdites au moins deux entrées et à distribuer le flux de fluide caloporteur résultant du mélange vers lesdites au moins deux sorties.

19. Système selon l'une des revendications 13 à 18, dans lequel le dispositif de circulation est agencé de manière à effectuer une sélection des flux de fluide caloporteur du côté des réacteurs, chaque échangeur de chaleur comportant une vanne contrôlées de distribution 1 vers N (51) branchée à la sortie de l'échangeur de chaleur et une vanne contrôlées de collecte N vers 1 (52) branchée à l'entrée de l'échangeur de chaleur, N désignant un nombre entier supérieur à 1.

20. Système selon l'une des revendications 13 à 18, dans lequel le dispositif de circulation est agencé de manière à effectuer une sélection des flux de fluide caloporteur du côté opposé aux réacteurs, chaque échangeur de chaleur comportant une conduite de distribution 1 vers M (61) branchée à la sortie de l'échangeur de chaleur et une conduite de collecte M vers 1 (62) branchée à l'entrée de l'échangeur de chaleur, M désignant un nombre entier supérieur à 1, chacune des M branches de la conduite de distribution étant à chaque fois reliée à une entrée respective d'une vanne de collecte respective P vers 1 (63), où P est un nombre entier égal ou supérieur au nombre des réacteurs, chacune des M branches de la conduite de collecte étant à chaque fois reliée à une sortie respective d'une vanne de distribution respective 1 vers P (64), où P est un nombre entier égal ou supérieur au nombre des réacteurs.

21. Procédé selon l'une des revendications 13 à 20, dans lequel le corps sorbant (2) est un corps adsorbant.

22. Procédé selon l'une des revendications 13 à 20, dans lequel le corps sorbant (2) est un liquide absorbant.

**Patentansprüche**

1. Thermisches Sorptionsverfahren, welches eine Vielzahl von Sorptionsreaktoren (5, Ads1, Ads2, Ads3) mit einem sorbierenden Körper einsetzt, der fähig ist, ein Arbeitsfluid in einer Dampfphase sorbieren zu können, wobei jeder der Sorptionsreaktoren einen Betriebszyklus ausführt mit einem Schritt des Druckabbaus und des Sorbierens (14), um eine Füllrate des sorbierenden Körpers mit dem Arbeitsfluid zu erhöhen, und einem Schritt des Druckaufbaus und der Desorption (15), um eine Füllrate des sorbierenden Körpers mit dem Arbeitsfluid zu reduzieren, wobei eine Vielzahl der Reaktoren den Betriebszyklus zeitlich versetzt durchführen, **dadurch gekennzeichnet, dass** ein erster der Sorptionsreaktoren (Ads1) mindestens vier Austäusche von Wärme während des Betriebszyklus vornimmt, um die Wärmeflüsse von mindestens zwei Reaktoren (Ads2, Ads3, Ads4) während des Schritts der Desorption und der Druckbeaufschlagung und die Übertragung von Wärmestrom zu mindestens zwei anderen Reaktoren (Ads2, Ads3, Ads4) während des Schritts der Druckentlastung und der Sorption auszuführen, ein erster Wärmeaustausch (Qi, Fig. 5D; Qi, Fig. 7E) wird zwischen dem ersten Reaktor in einer früheren Phase des Schrittes der Druckentlastung und Sorption und einem zweiten der Sorptionsreaktoren (Ads2) in einer nachfolgenden Stufe des Schritts der Desorption und Druckbeaufschlagung bewirkt, ein zweiter Wärmeaustausch (Qi, Fig. 5E; Qi, Fig. 7G) wird zwischen dem ersten Reaktor in einer nachfolgenden Phase des Schrittes des Druckabbaus und des Sorbierens und einem dritten der Sorptionsreaktoren (Ads3, Ads4) in einer früheren Phase des Schrittes des Druckaufbaus und der Desorption bewirkt, ein dritter Wärmeaustausch (Qi, Fig. 5A; Qi, Fig. 7A) wird zwischen dem ersten Reaktor zu einer früheren Phase des Schrittes der Druckbeaufschlagung und der Desorption und dem zweiten Reaktor in einer nachfolgenden Phase des Schrittes des Druckabbaus und der Sorption bewirkt, und ein vierter Wärmeaustausch (Qi, Fig. 5B; Qi, Fig. 7C) erfolgt zwischen dem ersten Reaktor in einer nachfolgenden Phase des Schrittes des Druckaufbaus und der Desorption und dem dritten Reaktor in einer früheren Phase des Schrittes der Druckentlastung und der Sorption.

2. Verfahren nach Anspruch 1, wobei jeder der Sorptionsreaktoren mindestens vier Wärmeübertragungen (Qi) während des Betriebszyklus ausführt, um Wärmeflüsse mindestens zwei anderen Reaktoren während des Druckschritts und der Desorption zu erhalten und um Wärmeströme zu mindestens zwei anderen Reaktoren während des Schritts der Druckentlastung und der Sorption zu übertragen.

3. Verfahren nach einem der Ansprüche 1 bis 2, wobei der erste Reaktor (Ads1) mindestens sechs Austäusche von Wärme während des Betriebszyklus ausführt, um aus mindestens drei Reaktoren (Ads2, Ads3, Ads4) Wärmeflüsse zu erhalten während des Schritts der Desorption und der Druckbeaufschlagung und Übertragen des Wärmestroms zu mindestens drei anderen Reaktoren (Ads2, Ads3, Ads4) während des Schritts der Druckentlastung und der Sorption,

ein fünfter Wärmeaustauscher (Qi, Fig. 7F) wird zwischen dem ersten Reaktor in einer Zwischenphase des Schritts der Druckentlastung und der Sorption und einem vierten der Sorptionsreaktoren (Ads3) in einer Zwischenstufe des Schritts der Desorption und des Druckaufbaus ausgeführt, ein sechster Wärmeaustausch (Qi, Fig. 7B) erfolgt zwischen dem ersten Reaktor in einer Zwischenphase des Schritts des Druckaufbaus und der Desorption und dem vierten Reaktor in einer Zwischenphase des Schritts der Druckentlastung und der Sorption.

4. Verfahren nach Anspruch 3, wobei jeder der Sorptionsreaktoren mindestens sechs Wärmeaustäusche (Qi, Fig. 7) während des Betriebszyklus macht, um aus mindestens drei Reaktoren während des Schritts der Desorption und der Druckbeaufschlagung einen Wärmefluss zu erhalten und Übertragen des Wärmestroms zu mindestens drei weiteren der Reaktoren während des Schritts der Druckentlastung und der Sorption.

5. Verfahren nach Anspruch 4, bei dem die Reaktorbetriebszyklen verschoben sind, um diese gleichzeitig über einen gegebenen Zeitabschnitt (7A) durchzuführen, um:

einen Wärmeaustausch (Qi) zwischen einem ersten Paar von Reaktoren (Ads2, Ads1) auszuführen, einen davon in der späteren Phase des Entspannungsschritt und des Sorbierens und den anderen in der früheren Phase des Schritts der Desorption und der Druckbeaufschlagung mittels eines ersten Kreislauf des Wärmeübertragungsfluids (140) auszuführen und

einen Wärmeaustausch zwischen einem zweiten Paar von Reaktoren (Ads3, Ads4) auszuführen, von denen einer in der früheren Phase des Entspannungsschritts und der Sorption ist und die andere in der Phase nach dem Schritt des Druckabbaus und der Desorption mittels einer zweiten Kühlmittelkreislauf (140) ist.

6. Verfahren nach einem der Ansprüche 1 bis 5, wobei der erste Reaktor einen Wärmeaustausch mit einer Kältequelle wenigstens während einer letzten Stufe (7H) des Druckentlastungsschritts und der Sorption ausführt.

7. Verfahren nach einem der Ansprüche 1 bis 6, wobei der erste Reaktor einen Wärmeaustausch mit einer Wärmequelle zumindest in einer letzten Phase (7D) des Schritts der Desorption und der Druckbeaufschlagung einsetzt.

8. Verfahren nach einem der Ansprüche 1 bis 7, wobei das Arbeitsfluid Wasser umfasst.

9. Verfahren nach einem der Ansprüche 1 bis 8, wobei das Arbeitsfluid einen Kühlkreislauf zur Erzeugung von Kälte in einer Verdampfungskammer (7) durchläuft.

10. Verfahren nach einem der Ansprüche 1 bis 9, wobei der saugfähige Körper (2) ein Adsorbens-Körper ist.

11. Verfahren nach Anspruch 10, wobei der Adsorptionskörper (2) Zeolith enthält.

12. Verfahren nach einem der Ansprüche 1 bis 9, wobei der saugfähige Körper (2) ein flüssiges Absorptionsmittel ist.

13. Sorptionswärmesystem mit:

mindestens drei Reaktoren zur Sorption (Ads1, Ads2, Ads3, Ads4), die geeignet sind, in einem Betriebszyklus gegenseitig in der Zeit zueinander verschoben zu funktionieren, jeder Reaktor umfasst:

einen saugfähigen Körper (2) der fähig ist, ein Arbeitsfluid in einer dampfförmigen Phase zu sorbieren, wenigstens eine Fluidleitung (6, 8) in Verbindung mit dem Reaktor, um das Arbeitsfluid zu dem Reaktor in einem Schritt der Druckentlastung und der Sorption des Arbeitszyklus zu bringen und um das Arbeitsfluid des Reaktors in einem Schritt des Druckaufbaus und der Desorption des Betriebszykluses zu entladen, und ein Wärmetauscher (3), der fähig ist, um ein Wärmeaustauschfluid in indirektem Wärmekontakt mit dem Sorptionsmittel in dem Reaktorkörper zu bringen,

und eine Einrichtung zur Zirkulation von Kühlmittel (50, 60) verbunden mit den Wärmetauschern der unterschiedlichen Sorptionsreaktoren, **dadurch gekennzeichnet, dass** die Einrichtung zur Zirkulation von Kühlmittel kontrollierte Verteilungsventile (51, 52; 63, 64) umfasst, die geeignet sind, selektiv Verbindungen für das Kühlmittel zwischen den Wärmetauschern herzustellen, um Wärmestörme zwischen den Sorptionsreaktoren zu übertragen,

wobei die Verteilerventile so gesteuert werden, dass ein erster Sorptionsreaktor mindestens vier Wärmeübertragungen während des Betriebszyklus durchführt, um die Wärmeflüsse aus mindestens zwei weiteren Reaktoren während des Schrittes des Durckaufbaus und des Desorbierens zu erhalten und den zu übertragenden Wärmefluss zu mindestens zwei anderen Reaktoren während des Druckentlastungsschritt und der Sorption,

ein erster Wärmeaustausch findet zwischen dem ersten Reaktor in einer frühen Phase des Entspannungsschritt und der Sorption und einem zweiten der Sorptionsreaktoren statt zwischen dem ersten Reaktor in einer nachfolgenden Phase der Druckentlastungsschritt und der Sorption und einem dritten der Reaktoren in einem frühen Stadium der Stufe der Desorption und der Druckbeaufschlagung findet ein zweiter Wärmeaustausch statt,

wobei ein dritter Wärmeaustausch zwischen dem ersten Reaktor zu einem früheren Zeitpunkt des Desorptions- und Druckbeaufschlagungsschritts und dem zweiten Reaktor in einer nachfolgenden Phase des Druckentlastungsschritt und Sorbens durchgeführt wird, und

ein vierter Wärmeaustausch zwischen dem ersten Reaktor in einer nachfolgenden Stufe der Desorption und dem Druckschritt und dem dritten Reaktor in einer früheren Phase des Druckentlastungs- und dem Sorptionsschritt durchgeführt wird.

14. System nach Anspruch 13, umfassend wenigstens vier Sorptionsreaktoren, bei denen die Verteilerventile so gesteuert werden, dass der erste Reaktor mindestens sechs Wärmeaustäusche während des Betriebszyklus ausführt, um Wärmeflüsse von mindestens drei weiteren Reaktoren zu erhalten während des Schritts der Desorption und der Druckbeaufschlagung und Übertragen von Wärmeströmen zu mindestens drei weiteren der Reaktoren während des Druckentlastungsschritt und Sorption,

einen fünften Wärmeaustausch zwischen dem ersten Reaktor in einer Zwischenphase des Druckentlastungsschritt und der Sorption und einem vierten der Reaktoren in einer Zwischenphase des Schritts der Desorption und der Druckbeaufschlagung durchgeführt wird,

wobei ein sechster Wärmeaustausch zwischen dem ersten Reaktor in einer Zwischenphase des Schritts der Druckaufbaus und der Desorption und dem vierten Reaktor in einer Zwischenphase des Schritts der Druckentlastung und der Sorption durchgeführt wird.

15. System nach Anspruch 14, wobei die Verteilerventile so gesteuert werden, dass jeder Sorptionsreaktor mindestens sechs Wärmeaustausche während des Betriebszyklus ausführt, um den Wärmefluss aus mindestens drei der anderen Reaktoren zu erhalten während des Schritts der Desorption und der Druckbeaufschlagung und Übertragen von Wärmestrom zu mindestens drei der anderen Reaktoren während des Schritts der Druckentlastung und der Sorption.

16. System nach Anspruch 15, wobei die Einrichtung des Kühlmittelstroms dazu geeignet ist, gleichzeitig zumindest zwei unabhängige Schleifen des zirkulierenden Wärmeübertragungsfluid (140) zu erzeugen:

einerseits einen Wärmeaustausch zwischen einem ersten Paar von Reaktoren, von denen einer in der späteren Phase des Schrittes des Druckabbaus und des Sorbierens und der andere in der früheren Phase des Schritts des Druckaufbaus und der Desorption erfolgt und

andererseits ein Wärmeaustausch zwischen einem zweiten Paar von Reaktoren, von denen eines in der früheren Phase des Schritts der Druckentlastung der Sorption und der andere in der späteren Phase des Schritts des Druckaufbaus und der Desorption erfolgt.

17. System nach Anspruch 16, wobei eine Zirkulationspumpe (43) in jedem der mindestens zwei Kreisläufe (140) angeordnet ist.

18. System nach einem der Ansprüche 13 bis 17, wobei die Zirkulationseinrichtung einen Wärmeübertragungsfluid-Mischer (45) mit mindestens zwei Eingängen (41) aufweist, die mit den Ausgängen der wenigstens zwei Wärmetauscher (3) mittels der gesteuerten Ventile (51, 63) verbindbar sind, und mindestens zwei Auslässe (42) hat, die mit den Eingängen der mindestens zwei Wärmetauscher mit Hilfe von gesteuerten Ventilen (52, 64) verbindbar sind, wobei der Mischer des Kühlmittels in der Lage ist, Kühlmittelströmungen zu mischen, die empfangen werden aus den mindestens zwei Eingängen und den aus der Mischung, um die zumindest zwei Ausgänge resultierendem Kühlmittelstrom zu verteilen.

19. System nach einem der Ansprüche 13 bis 18, wobei die Zirkulationsvorrichtung angeordnet ist, um eine Auswahl an Wärmeübertragungsfluid von der Seite der Reaktoren durchzuführen, jeder Wärmetauscher umfasst ein gesteuertes Verteilungsventil 1 zu N (51) angeordnet an dem Auslass des Wärmetauschers und ein kontrollierendes Sammelventil für N bis 1 verbunden mit dem Einlass des Wärmetauschers, wobei N eine ganze Zahl größer als 1 ist.

**20.** System nach einem der Ansprüche 13 bis 18, wobei die Zirkulationsvorrichtung angeordnet ist, um eine Auswahl der Wärmeübertragung-Fluidströmung gegenüber den Reaktoren auszuführen, wobei jeder Wärmetauscher mit einer Förderleitung 1 zu M (61) an dem Auslass des Wärmetauschers versehen ist und mit einer Sammelleitung M zu 1 (62) am Einlass des Wärmetauschers, wobei M eine ganze Zahl größer als 1 ist, wobei jeder der M Zweige des Verteilungsrohrs jedes Mal einem jeweiligen Eingang eines entsprechenden Ventils beziehungsweise P zu 1 (63) verbunden ist, wobei P eine ganze Zahl gleich oder größer als die Anzahl von Reaktoren ist, wobei jeder der M Zweige der Sammelleitung jeweils mit einem entsprechenden Ausgang eines entsprechenden Abgabeventils 1 bis P (64) verbunden ist, wobei P eine ganze Zahl gleich oder größer als die Anzahl der Reaktoren ist.

**21.** Verfahren nach einem der Ansprüche 13 bis 20, wobei der saugfähige Körper (2) ein Adsorbens-Körper ist.

**22.** Verfahren nach einem der Ansprüche 13 bis 20, wobei der saugfähige Körper (2) ein flüssiges Absorptionsmittel ist.

**Claims**

**1.** Thermal sorption process using a plurality of sorption reactors (5, Ads1, Ads2, Ads3) comprising a sorbent for sorbing a vapour-phase working fluid,
in which each of the sorption reactors carries out an operating cycle comprising a depressurization/sorption step (14) to increase a level of filling of the sorbent by the working fluid, and a pressurization/desorption step (15) to reduce a level of filling of the sorbent by the working fluid, a plurality of the said reactors carrying out the operating cycle in a timewise offset manner,
**characterized in that** a first of the sorption reactors (Ads1) carries out at least four heat exchanges during the operating cycle in order to receive the heat flux from at least two other of the reactors (Ads2, Ads3, Ads4) during the pressurization/desorption step and to transfer the heat flux to at least two other of the reactors (Ads2, Ads3, Ads4) during the depressurization/sorption step,
a first heat exchange (Qi, Fig. 5D ; Qi, Fig. 7E) being carried out between the first reactor in a phase prior to the depressurization/sorption step and a second of the reactors (Ads2) in a phase subsequent to the pressurization/desorption step,
a second heat exchange (Qi, Fig. 5E ; Qi, Fig. 7G) being carried out between the first reactor in a phase subsequent to the depressurization/sorption step and a third of the reactors (Ads3 ; Ads4) in a phase prior to the pressurization/desorption step,
a third heat exchange (Qi, Fig. 5A ; Qi, Fig. 7A) being carried out between the first reactor in a phase prior to the pressurization/desorption step and the second reactor in a phase subsequent to the depressurization/sorption step, and
a fourth heat exchange (Qi, Fig. 5B ; Qi, Fig. 7C) being carried out between the first reactor in a phase subsequent to the pressurization/desorption step and the third reactor in a phase prior to the depressurization/sorption step.

**2.** Process according to Claim 1, in which each of the sorption reactors carries out at least four heat exchanges (Qi) during the operating cycle in order to receive the heat flux from at least two other of the reactors during the pressurization/desorption step and to transfer the heat flux to at least two other of the reactors during the depressurization/sorption step.

**3.** Process according to either of Claims 1 and 2, in which the first reactor (Ads1) carries out at least six heat exchanges during the operating cycle in order to receive the heat flux from at least three other of the reactors (Ads2, Ads3, Ads4) during the pressurization/desorption step and to transfer the heat flux to at least three other of the reactors (Ads2, Ads3, Ads4) during the depressurization/sorption step,
a fifth heat exchange (Qi, Fig. 7F) being carried out between the first reactor in an intermediate phase of the depressurization/sorption step and a fourth of the reactors (Ads3) in an intermediate phase of the pressurization/desorption step, a sixth heat exchange (Qi, Fig. 7B) being carried out between the first reactor in an intermediate phase of the pressurization/desorption step and the fourth reactor in an intermediate phase of the depressurization/sorption step.

**4.** Process according to Claim 3, in which each of the sorption reactors carries out at least six heat exchanges (Qi, Fig. 7) during the operating cycle to receive the heat flux from at least three other of the reactors during the pressurization/desorption step and to transfer the heat flux to at least three other of the reactors during the depressurization/sorption step.

5. Process according to Claim 4, in which the reactor operating cycles are offset so that, over a given period of time (7A), they simultaneously carry out:

a heat exchange (Qi) between a first pair of reactors (Ads2, Ads1), one being in the phase subsequent to the depressurization/sorption step and the other being in the phase prior to the pressurization/desorption step, by means of a first heat-transfer fluid circulating loop (140)
and
a heat exchange between a second pair of reactors (Ads3, Ads4), one being in the phase prior to the depressurization/sorption step and the other being in the phase subsequent to the pressurization/desorption step, by means of a second heat-transfer fluid circulating loop (140).

6. Process according to one of Claims 1 to 5, in which the first reactor carries out a heat exchange with a cold source at least in a final phase (7H) of the depressurization/sorption step.

7. Process according to one of Claims 1 to 6, in which the first reactor carries out a heat exchange with a hot source at least in a final phase (7D) of the pressurization/desorption step.

8. Process according to one of Claims 1 to 7, in which the working fluid comprises water.

9. Process according to one of Claims 1 to 8, in which the working fluid undergoes a refrigeration cycle to produce cold in an evaporation chamber (7).

10. Process according to one of Claims 1 to 9, in which the sorbent (2) is an adsorbent.

11. Process according to Claim 10, in which the adsorbent (2) comprises zeolite.

12. Process according to one of Claims 1 to 9, in which the sorbent (2) is an absorbent liquid.

13. Thermal sorption system comprising:

at least three sorption reactors (Ads1, Ads2, Ads3, Ads4) suitable for operating according to an operating cycle in a mutually offset manner over time, each reactor comprising:

a sorbent (2) suitable for sorbing a vapour-phase working fluid,
at least one fluid line (6, 8) communicating with the reactor to supply the working fluid to the reactor in a depressurization/sorption step of the operating cycle and to remove the working fluid from the reactor in a pressurization/desorption step of the operating cycle, and
a heat exchanger (3) suitable for placing a heat-transfer fluid in indirect thermal contact with the sorbent in the reactor,

and a heat-transfer fluid circulating device (50, 60) connected to the heat exchangers of the various sorption reactors, **characterized in that** the heat-transfer fluid circulating device comprises controlled delivery valves (51, 52 ; 63, 64) suitable for selectively causing communication of the heat-transfer fluid between the heat exchangers in order to transfer the heat flux between the sorption reactors,
in which the delivery valves are controlled so that a first of the sorption reactors carries out at least four heat exchanges during the operating cycle in order to receive the heat flux from at least two other of the reactors during the pressurization/desorption step and to transfer the heat flux to at least two other of the reactors during the depressurization/sorption step,
a first heat exchange being carried out between the first reactor in a phase prior to the depressurization/sorption step and a second of the reactors in a phase subsequent to the pressurization/desorption step,
a second heat exchange being carried out between the first reactor in a phase subsequent to the depressurization/sorption step and a third of the reactors in a phase prior to the pressurization/desorption step,
a third heat exchange being carried out between the first reactor in a phase prior to the pressurization/desorption step and the second reactor in a phase subsequent to the depressurization/sorption step, and
a fourth heat exchange being carried out between the first reactor in a phase subsequent to the pressurization/desorption step and the third reactor in a phase prior to the depressurization/sorption step.

14. System according to Claim 13, comprising at least four sorption reactors, in which the delivery valves are controlled so that the first reactor carries out at least six heat exchanges during the operating cycle in oder to receive the heat flux from at least three other of the reactors during the pressurization/desorption step and to transfer the heat flux to at least three other of the reactors during the depressurization/sorption step,

a fifth heat exchange being carried out between the first reactor in an intermediate phase of the depressurization/sorption step and a fourth of the reactors in an intermediate phase of the pressurization/desorption step,

a sixth heat exchange being carried out between the first reactor in an intermediate phase of the pressurization/desorption step and the fourth reactor in an intermediate phase of the depressurization/sorption step.

15. System according to Claim 14, in which the delivery valves are controlled so that each of the sorption reactors carries out at least six heat exchanges during the operating cycle in order to receive the heat flux from at least three other of the reactors during the pressurization/desorption step and to transfer the heat flux to at least three other of the reactors during the depressurization/sorption step.

16. System according to Claim 15, in which the heat-transfer fluid circulating device is suitable for simultaneously producing at least two independent heat-transfer fluid circulating loops (140) to simultaneously carry out:

on the one hand, a heat exchange between a first pair of reactors, one being in the phase subsequent to the depressurization/sorption step and the other being in the phase prior to the pressurization/desorption step and, on the other hand, a heat exchange between a second pair of reactors, one being in the phase prior to the depressurization/sorption step and the other being in the phase subsequent to the pressurization/desorption step.

17. System according to Claim 16, in which a circulating pump (43) is placed in each of the at least two circulating loops (140).

18. System according to one of Claims 13 to 17, in which the circulating device comprises a heat-transfer fluid mixer (45) comprising at least two inlets (41) connectable to the outlets of at least two of the heat exchangers (3) by means of the controlled valves (51, 63) and at least two outlets (42) connectable to the inlets of the at least two heat exchangers by means of the controlled valves (52, 64), the said heat-transfer fluid mixer being suitable for mixing heat-transfer fluid streams received from the said at least two inlets and for delivering the heat-transfer fluid stream resulting from the mixture to the said at least two outlets.

19. System according to one of Claims 13 to 18, in which the circulating device is arranged so as to carry out a selection of the heat-transfer fluid streams on the reactor side, each heat exchanger comprising a controlled 1-to-N delivery valve 1 (51) connected to the outlet of the heat exchanger and a controlled N-to-1 collecting valve (52) connected to the inlet of the heat exchanger, where N is an integer higher than 1.

20. System according to one of Claims 13 to 18, in which the circulating device is arranged so as to carry out a selection of the heat-transfer fluid streams on the side opposite the reactors, each heat exchanger comprising a 1-to-M delivery line (61) connected to the outlet of the heat exchanger and an M-to-1 collecting line (62) connected to the inlet of the heat exchanger, where M is an integer higher than 1, each of the M legs of the delivery line being at any time connected to a respective inlet of a respective P-to-1 collecting valve (63), where P is an integer equal to or higher than the number of reactors, each of the M legs of the collecting line being at any time connected to a respective outlet of a respective 1-to-P delivery valve 1, where P is an integer equal to or higher than the number of reactors.

21. Process according to one of Claims 13 to 20, in which the sorbent (2) is an adsorbent.

22. Process according to one of Claims 13 to 20, in which the sorbent (2) is an absorbent liquid.

FIG.1

FIG.2

FIG.3

FIG.4

FIG.5

FIG.6

21

FIG.7

FIG.8

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5802870 A
- EP 0674142 A